# EUROPEAN PATENT APPLICATION

(11) **EP 4 557 449 A1**
(43) Date of publication of application: **21.05.2025**
(21) Application number: 24767303.1
(22) Date of filing: 13.02.2024
(51) Int. Cl.: H01M 10/42, A62C 3/16, A62D 1/00, A62C 35/10, H01M 50/204, H01M 50/289

(54) **SEPARATION WALL MEMBER HAVING FIRE EXTINGUISHING PAD AND PACK CASE INCLUDING THE SAME**

(30) Priority: 07.03.2023 KR 20230029893
(71) Applicant: LG Energy Solution, Ltd., Seoul 07335 (KR)
(72) Inventor: LEE, Gi Hwan, Daejeon 34122 (KR); JANG, Byung Do, Daejeon 34122 (KR); SON, Hong Se, Daejeon 34122 (KR); KIM, Jin Hyuk, Daejeon 34122 (KR); LEE, Hyoung Suk, Daejeon 34122 (KR)
(74) Representative: Plasseraud IP
(86) International application number: PCT/KR2024/001993
(87) International publication number: WO 2024/186014

(57) **Abstract**

The present disclosure relates to a separation wall member installed between a plurality of battery modules mounted in a battery pack, and, in one example, at least one side surface of the separation wall member has a plurality of groove structures, and the plurality of groove structures are equipped with fire-extinguishing pads embedded with a fire extinguishing agent.

## Description

This application claims the benefit of priority based on Korean Patent Application No. 10-2023-0029893, filed on March 07, 2023, and the entire contents of the Korean patent application are incorporated herein by reference.

### [Technical Field]

The present disclosure relates to a lightweight separation wall member having a fire extinguishing pad that automatically discharges a fire extinguishing agent in response to a fire occurring within the pack case, and a pack case including the same.

### [Background Art]

Secondary batteries, unlike primary batteries, are rechargeable and have been widely researched and developed in recent years due to the potential for miniaturization and large capacity. The demand for secondary batteries as an energy source is increasing rapidly due to the increasing technological development and demand for mobile devices, as well as electric vehicles and energy storage systems that are emerging in response to environmental protection needs.

Secondary batteries are categorized into coin type batteries, cylindrical batteries, prismatic batteries, and pouch type batteries according to the shape of the battery case. In a secondary battery, an electrode assembly mounted inside the battery case is a chargeable and dischargeable power generating device comprising a stacked structure of electrodes and separators.

Since secondary batteries are demanded to be used continuously for a long period of time, it is necessary to effectively control the heat generated during the charging and discharging process. If the secondary battery is not properly cooled, the increase in temperature will cause an increase in current, which will again cause an increase in temperature, which will cause a chain reaction, eventually leading to the catastrophic condition of thermal runaway.

In addition, if the secondary batteries are grouped in the form of modules or packs, thermal runaway caused by one secondary battery will cause the other secondary batteries in the vicinity to continuously overheat, resulting in the phenomenon of thermal propagation. In other words, when a thermal runaway occurs in a battery module in a battery pack, a large amount of conductive dust, gas, and flame are emitted from the high-voltage terminals of the battery module, which causes dust to accumulate on the high-voltage terminals of other neighboring battery modules and triggers the phenomenon of thermal propagation by heat transfer by gas and flame.

A design for preventing or delaying heat transfer of high heat from a battery cell or module that has undergone thermal runaway to neighboring battery cells or modules, comprising an insulation design that uses an insulation material to prevent or delay heat transfer from a battery module that has undergone thermal runaway to neighboring battery modules, and a heat dissipation design that initially and rapidly dissipates heat from a battery module that has undergone thermal runaway to the outside of the battery pack to reduce heat transfer to neighboring battery modules.

The prevention and delay of thermal runaway is a critical issue, especially in electric vehicles, where it can lead to life-threatening accidents, and laws and regulations are becoming increasingly strict. In other words, they require a sufficient delay time before the thermal runaway phenomenon spreads to allow time for emergency evacuation and safety measures. Therefore, there is a need for more effective measures to suppress or delay the occurrence of heat transfer in battery packs.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Disclosure]

### [Technical Problem]

The present disclosure is directed to providing a separation wall member capable of preventing, suppressing or delaying heat propagation in a battery pack.

However, the technical problem to be solved by the present disclosure is not limited to the above-described problem, and other problems not mentioned can be clearly understood by a person skilled in the art from the description of the invention described below.

### [Technical Solution]

The present disclosure relates to a separation wall member installed between a plurality of battery modules mounted in a battery pack, in one example, at least one side surface of the separation wall member comprises a plurality of groove structures, wherein the plurality of groove structures are equipped with fire extinguishing pads embedded with a fire extinguishing agent.

In one embodiment of the present disclosure, the fire extinguishing pad may include a porous pad, a plurality of capsules embedded within the porous pad, and a liquid fire extinguishing agent sealed within the capsules.

For example, the liquid fire extinguishing agent may be a fluorinated ketone.

The capsules may be configured to melt or rupture by internal vapor pressure to release the liquid fire extinguishing agent when the temperature of the fire extinguishing pad is in a range of 120 to 220 °C.

The fire extinguishing agent released from the capsule may be released to the outside through pores of the porous pad.

In one embodiment of the present disclosure, the plurality of groove structures may form a honeycomb structure having a plurality of regularly aligned hexagonal grooves.

Here, the honeycomb structure may be provided on each of both sides of the separation wall member.

Further, the honeycomb structures, each provided on both sides of the separation wall member, may be staggered from each other by a half pitch along a longitudinal and/or transverse direction, not connected to each other.

Meanwhile, the present disclosure may provide a pack case including a base plate, side plates surrounding the periphery of the base plate, the separation wall member of the above configuration longitudinally and/or transversely disposed to divide an accommodated space defined by the side plates, and a lead covering an upper surface of the accommodated space.

In one example, the separation wall member may be a center beam and/or a cross beam of the pack case.

### [Advantageous Effects]

According to the separation wall member of the present disclosure having the configuration as described above, a fire extinguishing pad exposed on one side surface thereof reacts to an abnormally high temperature of a battery module that has caused a thermal runaway and discharges an embedded fire extinguishing agent. By the discharge of the fire extinguishing agent, the high temperature gases, particles and flames caused by the thermal runaway are cooled or extinguished, thereby thermally protecting other battery modules in the vicinity, and heat propagation is inhibited and delayed.

Further, the separation wall member of the present disclosure is configured to embed a fire extinguishing pad containing a fire extinguishing agent, and accordingly, the pack case does not need to provide a separate space and device for accommodating and discharging the fire extinguishing agent. Thus, by applying the separation wall member of the present disclosure, it is possible to effectively respond to the problem of heat propagation without changing the overall design of the pack case and without sacrificing the capacity of the battery pack.

In addition, the separation wall member of the present disclosure can secure sufficient rigidity while being lightweight by comprising the space accommodated for the fire extinguishing pad in a honeycomb structure, thereby contributing to reducing the weight of the pack case.

However, the technical effects that can be obtained through the present disclosure is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present disclosure and serve to facilitate understanding of the technical idea of the present disclosure together with the detailed description of the invention described below, the present disclosure should not be limitedly interpreted on the basis of the drawings.
FIG. 1 is a drawing illustrating an example installation of a separation wall member according to one embodiment of the present disclosure.
FIG. 2 is a cross-sectional view of a separation wall member of FIG. 1 with an incision along line "A-A".
FIG. 3 is a drawing illustrating a cross-sectional view of a fire extinguishing pad.
FIG. 4 is a drawing illustrating another embodiment of a separation wall member.
FIG. 5 is a drawing illustrating one embodiment of mounting a fire extinguishing pad to a separation wall member.
FIG. 6 is a drawing illustrating another embodiment of mounting a fire extinguishing pad on a separation wall member.
FIG. 7 is a drawing illustrating a pack case including a separation wall member according to one embodiment of the present disclosure.
FIG. 8 is a drawing illustrating a battery pack with a battery module mounted in the pack case of FIG. 7, according to one embodiment of the invention.
FIG. 9 is a drawing illustrating another embodiment of a battery pack with a battery module mounted in the pack case of FIG. 7.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a separation wall member installed between a plurality of battery modules mounted in a battery pack, in one example, at least one side surface of the separation wall member comprises a plurality of regularly aligned groove structures, wherein the plurality of groove structures are equipped with fire extinguishing pads embedded with a fire extinguishing agent.

In one embodiment of the present disclosure, the fire extinguishing pad may include a porous pad, a plurality of capsules embedded within the porous pad, and a liquid fire extinguishing agent sealed within the capsules.

According to the separation wall member of the present disclosure having the configuration as described above, a fire extinguishing pad exposed on one side surface thereof reacts to an abnormally high temperature of a battery module that has caused a thermal runaway and discharges an embedded fire extinguishing agent. By the discharge of the fire extinguishing agent, the high temperature gases, particles, and flames caused by the thermal runaway are cooled or extinguished, thereby thermally protecting other battery modules in the vicinity, and heat propagation is suppressed and delayed.

Further, the separation wall member of the present disclosure is configured to embed a fire extinguishing pad containing a fire extinguishing agent, and accordingly, the pack case does not need to provide a separate space and device for accommodating and discharging the fire extinguishing agent. This means that by applying the separation wall member of the present disclosure, it is possible to effectively respond to the problem of heat propagation without changing the overall design of the pack case and without sacrificing the capacity of the battery pack.

In addition, the separation wall member of the present disclosure can be lightweight while securing sufficient rigidity by organizing the space accommodated for the fire extinguishing pad into a honeycomb structure, thereby contributing to reducing the weight of the pack case.

### [Mode for Invention]

Hereinafter, specific embodiments of a separation wall member 130 for a pack case according to the present disclosure will be described in detail with reference to the accompanying drawings. For reference, the directions of front, back, up, down, left, and right used in the following description to designate relative positions are for the purpose of understanding the invention and refer to the directions shown in the drawings unless otherwise specified.

### [first embodiment]

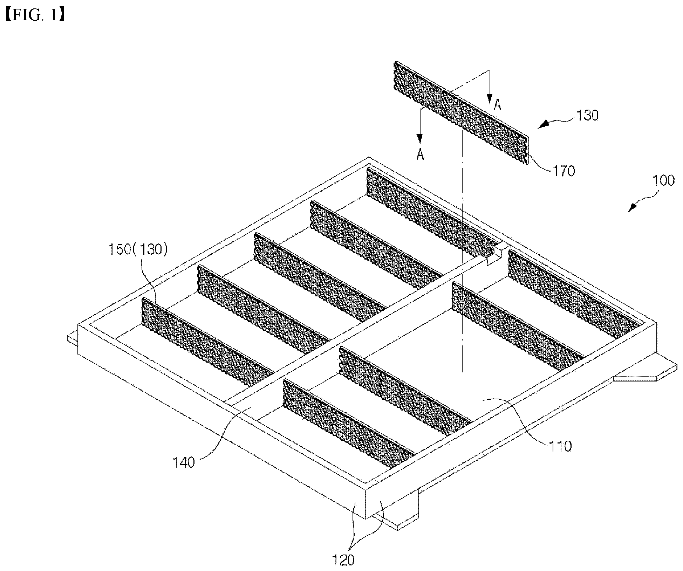

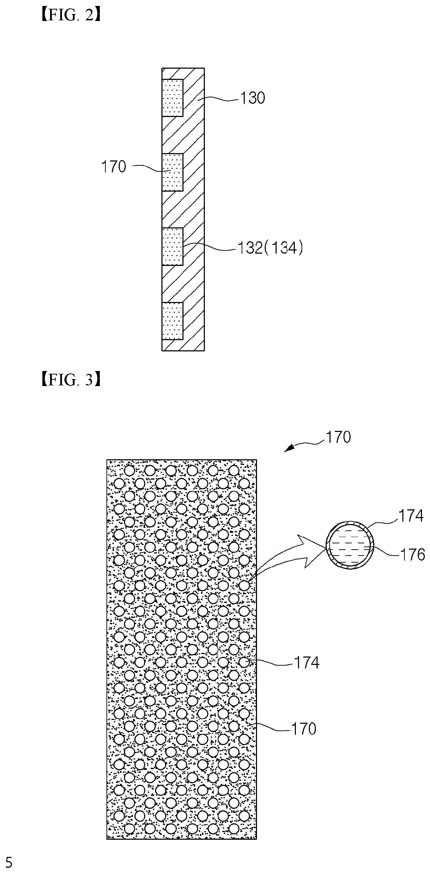

FIG. 1 is a drawing illustrating an example installation of a separation wall member according to the present disclosure, and FIG. 2 is a cross-sectional view of a separation wall member of FIG. 1 with an incision along line "A-A".

FIG. 1 is a drawing illustrating that a separation wall member 130 (hereinafter referred to as a "separation wall member" briefly) of a battery pack according to the present disclosure may be applied as a center beam 140 and/or a cross beam 150 of a pack case 100. Here, the center beam 140 is defined to refer to a longitudinal separation wall member 130 that crosses the center of the pack case 100 and divides the internal accommodated space from side to side, and cross beam 150 is defined to refer to a transverse separation wall member 130 that forms a grid with respect to the center beam 140.

The separation wall member 130 of the present disclosure corresponds to a member that is installed between a plurality of battery modules 200 mounted in the battery pack 10 to form a plurality of accommodated spaces, one battery module 200 is mounted in each of the divided accommodated spaces. Thus, the separation wall member 130 functions as a wall to separate or isolate the battery modules 200, and heat transfer between the battery modules 200 necessarily involves the separation wall member 130.

FIG. 2 is a cross-sectional view of one cross beam 150 removed from the pack case 100 of FIG. 1. For reference, FIG. 2 is one example of a separation wall member 130, although the same construction as shown in FIG. 2 may be applied to a center beam 140. Referring to FIG. 2, the cross beam 150, which is the separation wall member 130, has a fire extinguishing pad 170 exposed on one surface, and the fire extinguishing pad 170 has a fire extinguishing agent 176 embedded therein.

The fire extinguishing pad 170 exposed on one side surface of the cross beam 150 contacts a battery module 200 mounted in a plurality of accommodated spaces in the pack case 100 of FIG. 1. In other words, the fire extinguishing pad 170 receives heat from the battery module 200 mainly in the form of conduction heat transfer. If a thermal runaway occurs in any of the battery cells 210 comprising the battery module 200 and is in an abnormally high temperature condition, the fire extinguishing pad 170 provided in the separation wall member 130 will receive an abnormally large amount of heat and will discharge the fire extinguishing agent 176 embedded therein in response to such heat. By the discharge of the fire extinguishing agent 176, the other battery modules 200 in the vicinity are thermally protected as the hot gases, particles, and flames caused by the thermal runaway are cooled or extinguished, and the heat propagation is inhibited and delayed.

The separation wall member 130 of the present disclosure is configured to embed a fire extinguishing pad 170 containing a fire extinguishing agent 176, and accordingly, the pack case 100 does not need to provide a separate space and device for accommodating and discharging the fire extinguishing agent 176. This means that by applying the separation wall member 130 of the present disclosure, the problem of heat propagation can be effectively counteracted without changing the overall design of the pack case 100 and without sacrificing the capacity of the battery pack 10.

FIG. 3 is a cross-sectional view of a fire extinguishing pad 170 according to one embodiment. Referring to the drawing, the fire extinguishing pad 170 includes a porous pad 172, a plurality of capsules 174 embedded within the porous pad 172, and a liquid fire extinguishing agent 176 sealed within the capsules 174. Sealing the liquid fire extinguishing agent 176 within the capsules 174 is a means of reliably preserving the fire extinguishing agent 176 within the fire extinguishing pad 170 until a thermal runaway event occurs, and in particular, using the liquid fire extinguishing agent 176 is advantageous because the liquid fire extinguishing agent 176 occupies a small space because it explosively expands in volume by vaporization, yet can be expected to extinguish the fire effectively. Moreover, the porous pad 172, which serves as a kind of container for the capsule 174, is because it includes a plurality of pores and is suitable for the discharge of the vaporized fire extinguishing agent 176.

For example, a preferred liquid fire extinguishing agent 176 can be a fluorinated ketone. Fluorinated ketone is a substance artificially made by replacing a hydrogen atom in a ketone with fluorine, and is colorless and odorless, and its viscosity is almost the same as water, so it is easy to put in the capsule 174, and its insulation capacity is more than twice as large as that of nitrogen because of fluorine, which has stable properties, so it does not conduct electricity and does not cause reactions such as oxidation with the substance it comes into contact with, and its surface tension is very small, so when it comes into contact with an object, it spreads well without forming droplets, so it is very suitable for fire extinguishing. In addition, fluorinated ketones are non-toxic and harmless to the human body because they extinguish fire, and they are effective fire extinguishing agents that quickly evaporate upon contact with fire or smoke, taking away heat quickly, and they are more environmentally friendly than conventional fire extinguishing substances because they do not leave any residue after evaporation. In particular, the non-conductivity due to the stable nature of fluorine is suitable for responding to a fire in a battery pack 10 caused by a thermal runaway of a secondary battery.

However, since fluorinated ketones have a boiling point of 49°C, which is much lower than water, they exist as a liquid at room temperature but quickly vaporize when the temperature increases. Therefore, it is necessary to design the capsule 174 containing the liquid fluorinated ketones and the porous pad 172 wrapping the capsule 174 so that the material, thickness, etc. of the capsule 174 acts as an appropriate insulation material. For example, the capsule 174 may be designed such that when the temperature of the fire extinguishing pad 170 in contact with the battery module 200 is in the temperature range of 120 to 220 °C, the capsule 174 may melt and/or the vapor pressure of the fire extinguishing agent 176 vaporized therein may cause the capsule 174 to rupture and release the fire extinguishing agent 176. The fire extinguishing agent 176 released from the capsule 174 may be released to the outside through the pores of the porous pad 172, thereby providing an early response to a fire in the battery module 200.

Referring again to FIG. 2, the separation wall member 130 has a plurality of regularly aligned groove structures 132 on the surface thereof, and the fire extinguishing pad 170 is secured within the groove structures 132. Here, the form of the regular groove structure 132 shown in FIG. 2 is a plurality of hexagonal grooves regularly aligned to form a honeycomb structure 134. The honeycomb structure 134 is a dense structure in which each side of a hexagon (e.g., a regular hexagon) is overlapped by one side of another hexagon, such that, except for the corners, the perimeter of one hexagon is surrounded by six other hexagons in a regular arrangement.

The honeycomb structure 134 is a particularly representative structure having a high stiffness compared to volume. By having the honeycomb structure 134 on the surface of the separation wall member 130 of the present disclosure, it is possible to have space for embedding a plurality of fire extinguishing pads 170 while maintaining a high rigidity of the separation wall member 130. This means that there is no need to thicken the separation wall member 130 in order to accommodate a sufficient number of fire extinguishing pads 170 while maintaining mechanical rigidity, which can effectively suppress and delay heat propagation while lightening the weight of the separation wall member 130 and the pack case 100 included therein.

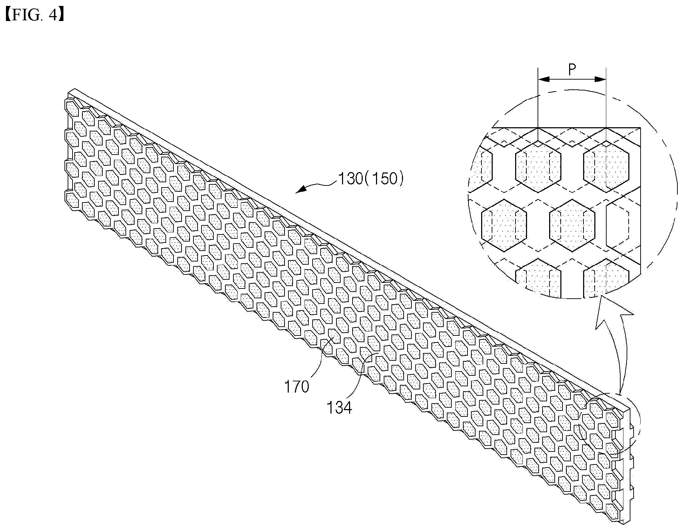

FIG. 4 is a drawing illustrating an alternative embodiment of the separation wall member 130, wherein the groove structure 132 in the illustrated embodiment is provided as a honeycomb structure 134 on both sides of the separation wall member 130. The honeycomb structure 134 enables lightweighting, so that the separation wall member 130 can be slightly thickened while forming a honeycomb structure 134 with fire extinguishing pads 170 mounted on both sides thereof to better respond to a fire in the battery module 200.

Here, the honeycomb structures 134 provided on each side of the separation wall member 130 may not be connected to each other, in which case the honeycomb structures 134 on either side of the separation wall member 130 may be disposed from each other by a half pitch P along a longitudinal and/or transverse direction. Pitch refers to the longitudinal or transverse spacing between the hexagons that are regularly arranged to form the honeycomb structures 134, such that the honeycomb structures 134 on both sides of the separation wall member 130 are not overlapping each other, but are instead staggered from each other by a half pitch (P) along the longitudinal and/or transverse direction, so that the stiffness of the separation wall member 130 as a whole is further enhanced by the staggered honeycomb structures 134, as if they were a network. The separation wall member 130, exemplarily shown in FIG. 4, illustrates an embodiment in which the honeycomb structures 134 on both sides thereof are disposed longitudinally from each other by a half pitch (P).

### [second embodiment]

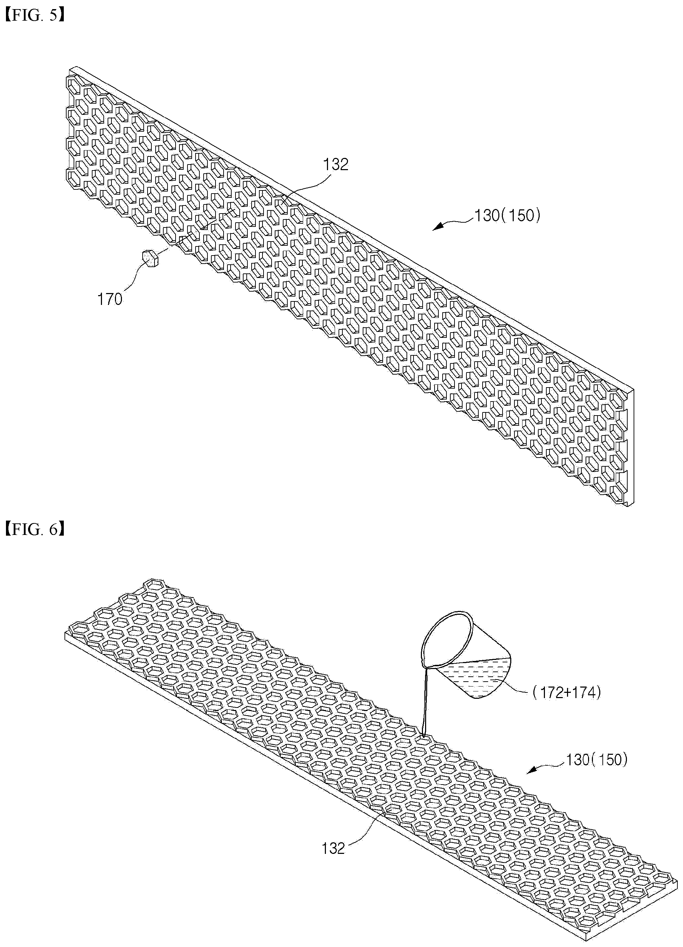

FIGS. 5 and 6 show embodiments of mounting a fire extinguishing pad 170 on the separation wall member 130, respectively.

The embodiment of FIG. 5 relates to a method of separately preparing a fire extinguishing pad 170 that conforms to the shape of a groove structure 132 provided in the separation wall member 130, and then inserting the fire extinguishing pad 170 into the groove structure 132, such as by adhesion or fitting.

For example, the fire extinguishing pad 170 may be produced using a foaming molding technique, in other words, a porous pad 172 having a plurality of pores embedded therein may be produced by mixing a foaming agent in a thermoplastic resin or the like, or by injecting a gas such as nitrogen during the molding process. In this case, a fire extinguishing pad 170 having a structure as shown in FIG. 3 can be manufactured by mixing a capsule 174 sealed with a liquid fire extinguishing agent 176 in a resin used for molding and performing foaming molding. By making the mold used for foaming molding in the form of the groove structure 132 provided in the separation wall member 130, the fire extinguishing pad 170 can be made in an exact size and shape.

FIG. 6 schematically illustrates an embodiment in which the fire extinguishing pad 170 is mounted using the separation wall member 130 itself in which the groove structure 132 is formed as a mold, without the need to prepare a separate mold. By using the separation wall member 130 as a mold, mold costs are saved, and it is possible to make the separation wall member 130 with a fire extinguishing pad 170 that fits perfectly into the groove structure 132 of the separation wall member 130 without having to go through a separate assembly process. In particular, the embodiment of FIG. 6 is also an advantageous embodiment when a plurality of groove structures 132 are provided by the honeycomb structures 134, or when the shape of the groove structures 132 is complex, or when the shape of the plurality of groove structures 132 is not the same.

### [third embodiment]

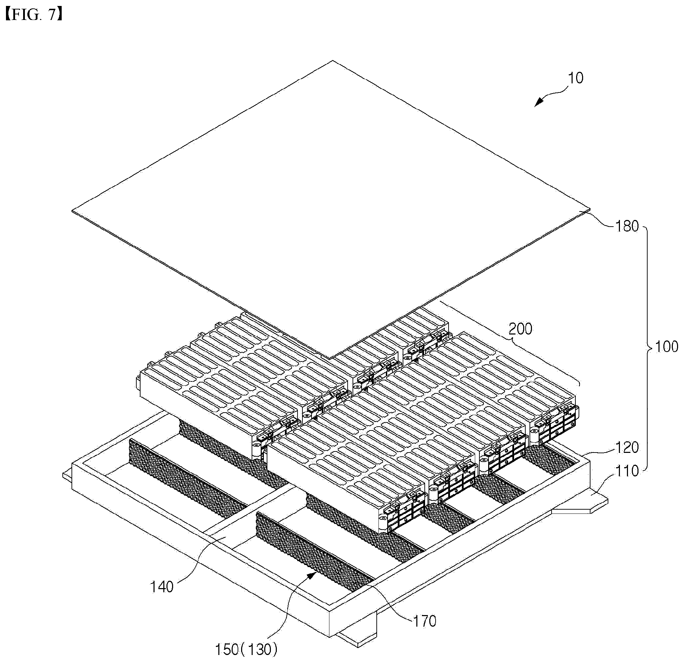

FIG. 7 is a drawing illustrating a pack case 100 including a separation wall member 130 according to a first embodiment of the present disclosure.

The pack case 100 shown includes a base plate 110 forming a lower surface, a side plate 120 surrounding the periphery of the base plate 110, a first embodiment of the separation wall member 130 longitudinally and/or transversely disposed to divide an accommodated space defined by the side plates 120, and a lead 180 covering the upper surface of the accommodated space.

The separation wall member 130 described in detail above may have the lower surface thereof joined to the upper surface of the base plate 110 by laser welding, blazing, or the like, or may be coupled by bolting or the like. Further, in the embodiment shown in FIG. 7, the separation wall member 130 of the first embodiment forms a cross beam 150 of the pack case 100. Obviously, as described above, the separation wall member 130 of the first embodiment may also be applied as a center beam 140.

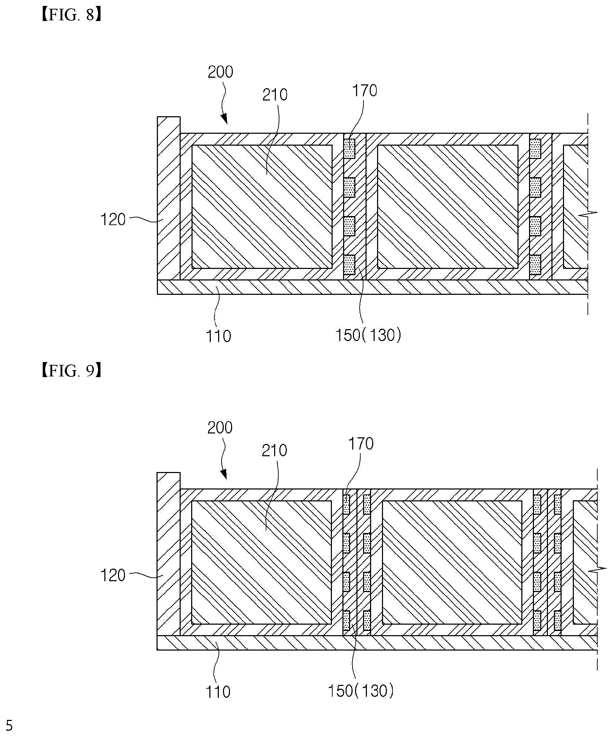

FIG. 8 is a drawing illustrating one embodiment of the battery pack 10 with battery modules 200 mounted in the pack case 100 of FIG. 7. The cross beams 150 having fire extinguishing pads 170 are aligned such that the fire extinguishing pads 170 face in the same direction, such that every battery module 200 is assigned one fire extinguishing pad 170 (referring to FIGS. 7 and 8). By assigning one fire extinguishing pad 170 to each battery module 200, if a thermal runaway occurs in any battery module 200, the fire extinguishing pad 170 assigned to that battery module 200 will react thermally to actively suppress the thermal runaway by ejecting vaporized fire extinguishing agent 176. As the temperature of the battery module 200 is lowered by the ejection of the fire extinguishing agent 176, the thermal runaway is delayed, and the delayed effect of the thermal runaway is maintained for as long as possible by sequentially reacting fire extinguishing pads 170 along the direction of progression of the thermal runaway when viewed from the battery pack 10 as a whole.

FIG. 9 is a drawing illustrating another embodiment of a battery pack 10 with a battery module 200 mounted in the pack case 100 of FIG. 7. Distinguishing this embodiment from the embodiment of FIG. 8 is that fire extinguishing pads 170 are provided on both sides of the cross beams 150. By having fire extinguishing pads 170 on both sides of the battery modules 200, more effective fire suppression is achieved by doubling the amount of fire extinguishing agent 176 to deal with a fire in either battery module 200. While FIG. 9 illustrates an embodiment in which two separation wall members 130 having fire extinguishing pads 170 on one side are stacked to form a single cross beam 150, it will be appreciated that the embodiment of FIG. 9 can be implemented by using a single separation wall member 130 having fire extinguishing pads 170 on both sides to form the cross beam 150, as described in the embodiment of FIG. 4.

As above, the present disclosure has been described in more detail through the drawings and embodiments. However, since the configuration described in the drawings or embodiments described herein is merely one embodiment of the present disclosure and do not represent the overall technical spirit of the invention, it should be understood that the invention covers various equivalents, modifications, and substitutions at the time of filing of this application.

### [Description of Reference Numerals]

10: battery pack
100: pack case
110: base plate
120: side plate
130: separation wall member
132: groove structure
134: honeycomb structure
140: center beam
150: cross beam
180: lead
170: fire extinguishing pad
172: porous pad
174: capsule
176: fire extinguishing agent
200: battery module
210: battery cell
P: pitch

## Claims

1. A separation wall member installed between a plurality of battery modules mounted in a battery pack,
at least one side surface of the separation wall member comprises a plurality of groove structures,
wherein the plurality of groove structures are equipped with fire extinguishing pads embedded with a fire extinguishing agent.

2. The separation wall member of claim 1, wherein the fire extinguishing pad comprises a porous pad, a plurality of capsules embedded within the porous pad, and a liquid fire extinguishing agent sealed within the capsules.

3. The separation wall member of claim 2, wherein the liquid fire extinguishing agent is a fluorinated ketone.

4. The separation wall member of claim 2, wherein the capsules are configured to melt or rupture by internal vapor pressure to release the liquid fire extinguishing agent when the temperature of the fire extinguishing pad is in a range of 120 to 220 °C.

5. The separation wall member of claim 4, wherein the fire extinguishing agent released from the capsule is released to the outside through pores of the porous pad.

6. The separation wall member of claim 1, wherein the plurality of groove structures form a honeycomb structure having a plurality of regularly aligned hexagonal grooves.

7. The separation wall member of claim 6, wherein the honeycomb structure is provided on each of both sides of the separation wall member.

8. The separation wall member of claim 7, wherein the honeycomb structures, each provided on both sides of the separation wall member, are not connected to each other, and staggered from each other by a half pitch along a longitudinal and/or transverse direction.

9. A pack case, comprising:
a base plate;
side plates surrounding the periphery of the base plate;
the separation wall member of claim 1, which is longitudinally and/or transversely disposed to divide an accommodated space defined by the side plates; and
a lead covering an upper surface of the accommodated space.

10. The pack case of claim 9, wherein the separation wall member is a cross beam.
